# EUROPEAN PATENT SPECIFICATION

(11) **EP 2 471 971 B1**
(45) Date of publication and mention of the grant of the patent: **30.03.2022**
(21) Application number: 09848738.2
(22) Date of filing: 28.08.2009
(51) Int. Cl.: B21C 37/09, C23C 2/00, C23C 2/02, C23C 2/36, C23C 2/38, C23C 6/00

(54) **METHOD AND SYSTEM FOR MANUFACTURING METAL-PLATED STEEL PIPE**
VERFAHREN UND SYSTEM ZUR HERSTELLUNG EINES METALLÜBERZOGENEN STAHLROHRS
PROCÉDÉ ET SYSTÈME POUR FABRIQUER UN TUYAU EN ACIER PLAQUÉ DE MÉTAL

(43) Date of publication of application: 04.07.2012
(73) Proprietor: Daiwa Steel Tube Industries Co., Ltd., Tokyo 101-0032 (JP)
(72) Inventor: NAKAMURA Shinichiro, Tokyo 101-0032 (JP); TAMAMURA Tadayoshi, Tokyo 101-0032 (JP)
(74) Representative: Betten & Resch
(86) International application number: PCT/JP2009/065062
(87) International publication number: WO 2011/024290

(56) References cited:
- WO-A2-2005/008116
- JP-A- 1 149 948
- JP-A- 5 148 607
- JP-A- 5 287 480
- JP-A- 7 243 015
- JP-A- 9 241 814
- JP-A- H05 148 607
- JP-A- 2000 087 203
- JP-A- 2000 087 203
- JP-A- 2000 219 946
- JP-A- 2000 219 947
- JP-A- 2000 219 947
- JP-A- 2004 083 950
- US-A- 4 795 503
- US-A- 5 251 804

## Description

### TECHNICAL FIELD

The present invention relates to a technique of manufacturing a metal-plated steel pipe, of which inner and outer faces or at least an inner face are subjected to molten metal-plating, by a continuous steel pipe manufacturing line.

### BACKGROUND ART

Hitherto, as one of representative methods of performing molten metal-plating on a steel pipe, there is a known hot-dipping method. Further, in recent years, a method of manufacturing a molten metal-plated steel pipe in a continuous steel pipe manufacturing line has been proposed from the viewpoint of a decrease in the cost. As one of the methods, Patent Literature 2 discloses a technique of manufacturing an outer-face plated steel pipe in a manner such that a steel sheet is continuously cold-formed into a tubular shape and the result is welded and is plated with molten metal. Furthermore, there is a growing need to perform an inner-face metal plating in recent years. Therefore, Patent Literature 3 discloses a method of easily plating both inner and outer faces of a steel pipe with molten metal in a continuous line in a manner such that one face in a steel sheet corresponding to the inner face of the steel pipe is subjected to plating in a steel pipe manufacturing line, the result is cold-formed into a tubular shape, a longitudinal end face of the steel sheet is welded, and the outer face of the steel pipe is subjected to molten metal-plating.

### CITATION LIST

### PATENT LITERATURES

[Patent Literature 1] Japanese Patent Application Laid-Open (JP-A) No. S56-116864
[Patent Literature 2] Japanese Patent Application Publication No. S52-43454
[Patent Literature 3] JP-A No. H05-148607

JP H05 148607 A discloses to continuously manufacture a steel tube coated with metal internally and externally in an easy way by pouring hot-dip metal on a steel sheet, executing one-side coating, thereafter subjecting it to cold forming to form into a tubular shape, executing seam welding and applying hot dip metal coating to the outside face of the obtd. steel tube. In a steel sheet recoiled from an uncoiler, one side which is the inside face of the steel tube is subjected to pretreatment such as shot blasting. Next, hot-dip metal is poured thereon by a pouring type one side hot-dip metal coating apparatus to execute one-side coating, and the one-side coated steel sheet is cooled by a cooling bath. This steel sheet is subjected to continuous cold forming by a roll forming machine to form into a tubular shape, and successively, the joint part is continuously subjected to seam welding in an axial direction by a welding machine. In the obtained steel tube, its outer face is subjected to pretreatment. After that, it is passed through a hot-dip metal coating apparatus and is immersed in a hot-dip coating bath, and the outer face of the steel tube is applied with hot-dip metal coating. This coated steel tube is cooled, is thereafter subjected to roll finishing and is cut into a prescribed length by a cutting machine, by which a steel tube product applied with hot-dip metal coating internally and externally can be obtained.

US 5 251 804 A discloses a steel strip which is cleaned by a shot blast machibe and its upper surface is coated with zinc in a molten plating device. The strip is formed by a roll forming machine into a tube and the outer surface of the tube is coated by the plating device.

JP2000-087203 A discloses to inexpensively prevent the reduction of the productivity caused by cleaning and removing stuck zinc powder in an alloying furnace. The solution comprises: At the time of producing a hot dip galvannealed steel sheet by dipping a steel sheet into a hot dip galvanizing bath, executing plating, controlling the stuck amount of plating by a gas wiping method and executing alloying treatment by induction-heating in an alloying furnace, the plating is applied by making the temperature of the hot dip galvanizing bath to <=455 deg.C. Moreover, the pressure of wiping gas at the tip of a nozzle in the gas wiping method is made to <=0.6 kg/cm2.

### DISCLOSURE OF INVENTION

### PROBLEM TO BE SOLVED BY THE INVENTION

Various specifications are required in the steel pipe which is manufactured in the continuous line. That is, the diameter of the steel pipe and characteristics such as corrosion resistance thereof need to be changed depending on the requirements of the consumers. Thus, in the continuous line, a steel pipe according to one specification is manufactured, and thereafter a steel pipe according to another specification is manufactured. However, at this time, there is a need to adjust a molten metal dipping time in the plating. In the case of the general dipping plating, only the molten metal dipping time may be adjusted. However, in the plating of the continuous line, the line speed needs to be changed in order to adjust the dipping time, which affects the manufacturing efficiency and so on. Thus, it is a first object of the invention to provide a system and a method capable of easily adjusting the dipping time in the continuous steel pipe manufacturing line.

Further, in the continuous line, the line needs to be stopped or the line speed needs to be decreased when any trouble occurs. When the line is temporarily stopped and restarted in order to perform plating in the continuous line, since the plating is performed after the pretreatment, an unplated portion may be generated in the length necessary for the spent time, which leads to an increase in the cost. Thus, the line speed may be decreased so that the continuous line does not stop. However, when the line speed is decreased in this way, the molten metal dipping time is extended at the time of processing the manufactured plated steel pipe, thereby causing a problem in that the plating is cracked or peeled. Thus, it is a second object of the invention to provide a method and a system capable of making the plating dipping time constant so as to correspond to a change in the line speed without stopping the line in the method of manufacturing the steel pipe in the continuous line.

### MEANS FOR SOLVING THE PROBLEMS

The present invention is defined in the independent claims. The dependent claims define embodiments of the invention. According to the invention, there is provided a steel pipe manufacturing system that manufactures a steel pipe, of which an inner face is subjected to molten metal-plating, from a steel sheet in a continuous manufacturing line, the system including: an inner-face plating performing part(unit) (for example, the inner-face molten metal-plating device 5) that performs molten metal-plating by pouring molten metal to the upper side of the steel sheet corresponding to the inner face of the steel pipe; a steel pipe forming part (for example, the forming device 7 and the welding device 8) for obtaining a continuous steel pipe by continuously cold-forming the steel sheet subjected to the inner-face plating into a tubular shape and seam-welding a longitudinal end face joint portion of the steel sheet formed in the steel pipe; , wherein the inner-face plating performing part (for example, the inner-face molten metal-plating device 5) includes a pouring part (for example, the pouring part 501) that pours molten metal to the upper side of the steel sheet, a molten metal supply part (for example, the molten metal pump 550) that supplies molten metal to the pouring part, and an inner-face wiping part (for example, the inner-face wiping part 503) that removes molten metal poured by the pouring part, wherein the pouring part has a movable means that is movable in parallel to a direction where the steel sheet advances, and in which the relative distance between the initial molten metal pouring position and the position of the inner-face wiping part is adjustable.

According to exemplary embodiment (2) corresponding to dependent claim 2, the system comprises
an outer-face plating performing part that
performs molten metal-plating by dipping the outer face of the steel pipe into molten metal,
wherein a dipping length of molten metal is adjustable in the outer-face plating performing part.

According to exemplary embodiment (3) corresponding to dependent claim 3 the position of the inner-face wiping part is fixed.

According to exemplary embodiment (4) corresponding to dependent claim 4 the outer-face plating performing part includes a plurality of dipping parts (for example, the dipping parts 601) which have a space for allowing the continuous steel pipe to pass therethrough, allow the outer face of the continuous steel pipe to be dipped into molten metal when molten metal is introduced into the space, and are continuously arranged in a direction where the continuous steel pipe advances, an outer-face wiping part (for example, the wiping part 602) that removes surplus metal from the continuous steel pipe dipped into molten metal by the dipping part, and a molten metal supply part (for example, the molten metal pump 550) that can supply molten metal into the dipping part, in which the molten metal supply part is, on the supply, able to change the number of the dipping part(s) which molten metal is to be supplied.

According to exemplary embodiment (5) corresponding to dependent claim 5 the outer-face wiping part is installed immediately after each of the plurality of dipping parts, and which can determine that any wiping part(s) of the plurality of wiping parts is to be operated.

According to exemplary embodiment (6) corresponding to dependent claim 6 the outer-face wiping part(s) installed between the dipping parts is (are) a movable open circular type wiping part(s) (for example, the movable open circular type wiping part 602-1) which includes an annular portion (for example, the annular portion 60201) surrounding the continuous steel pipe and a plurality of gas ejecting holes (for example, gas ejecting holes 60202) formed inside the annular portion and in which the annular portion is ring-opened and movable to a position distant from the continuous steel pipe.

According to the invention (7), there is provided
a method of manufacturing a steel pipe, of which at least an inner face is subjected to molten metal-plating, from a steel sheet in a continuous manufacturing line, the method including: performing molten metal-plating in an inner-face plating performing part by pouring molten metal to the upper side of the steel sheet corresponding to the inner face of the steel pipe; and
obtaining a continuous steel pipe by a steel pipe forming part by continuously cold-forming the steel sheet subjected to the inner-face plating into a tubular shape and seam-welding a longitudinal end face joint portion of the steel sheet formed in the steel pipe;
wherein the inner-face plating includes:
   pouring molten metal by a pouring part to the upper side of the steel sheet,
   supplying molten metal to the pouring part by a molten metal supply part, and
   removing molten metal poured by the pouring part by an inner-face wiping part,
   moving the pouring part in parallel to a direction where the steel sheet advances to adjust a relative distance between an initial molten metal pouring position and a position of the inner-face wiping part to adjust the molten metal dipping time.

According to exemplary embodiment (8) not covered by claims the method according to exemplary embodiments (7) is provided, in which the inner-face metal-plating includes pouring of pouring molten metal to the upper side of the steel sheet, and inner-face wiping of removing extra metal after the pouring, and in which the distance between the pouring position and the inner-face wiping position is adjusted.

According to exemplary embodiment (9) not covered by claims the outer-face metal-plating includes continuously installing a plurality of dipping troughs in a direction where the continuous steel pipe advances, the dipping trough having a space allowing the continuous steel pipe to pass therethrough and being able to dip the outer face of the continuous steel pipe into molten metal when molten metal is introduced into the space, supplying molten metal into the dipping trough(s), and dipping the outer face of the continuous steel pipe into molten metal, and outer-face wiping of removing extra metal from the continuous steel pipe dipped in molten metal by the dipping trough (s), and in which the number of the dipping trough(s), which molten metal is to be supplied, is determined, and the outer-face wiping is performed immediately after the trough positioned at the most rear stage among the dipping troughs to which molten metal is supplied.

According to exemplary embodiment (10) not covered by claims in the inner-face wiping, the molten plating attachment amount is adjusted by the air or inert gas wiping pressure using a blowing-off device.

According to exemplary embodiment (11) not covered by claims the inner-face metal-plating further includes different metal plating of performing metal plating by pouring different molten metal after the pouring.

According to exemplary embodiment (12) not covered by claims the outer-face metal-plating is different metal plating by supplying molten metal, to at least one of the dipping troughs, different from molten metal introduced into the other trough(s).

Here, the meaning of various technical terms used in the specification will be described. The "dipping length of molten metal" means the distance in which the steel sheet or the steel pipe is dipped into the molten metal and the extra molten metal is removed by the wiping. For example, in the case of the inner-face metal-plating, it means a distance from the molten metal pouring position to the inner-face wiping position. In the case of the outer-face metal-plating, it means a distance from the position where the steel pipe enters the dipping part filled with the molten metal to the outer-face wiping position.

### EFFECT OF THE INVENTION

According to the invention, in the continuous line for manufacturing the steel pipe, there is an effect that the dipping time according to the required specification may be easily obtained. Furthermore, there is an effect that the plating dipping time may be made constant so as to correspond to a change in the line speed without stopping the line even when any trouble occurs.

According to the invention (the system according to claim 1) there is an effect that the plating dipping time may be easily adjusted by adjusting the relative positional relation between the molten metal pouring position and the inner-face wiping part.

According to the exemplary embodiment (3), since the position of the wiping part is fixed, there is an effect that the dipping time may be changed without changing the distance between the wiping position and the subsequent process position.

According to the exemplary embodiments (4) and (9), there is an effect that the dipping time may be easily adjusted by changing the number of the supplied dipping part(s).

According to the exemplary embodiment (5), since the distance from the dipping position to the wiping position may be made constant even when the number of the dipping part(s) to which molten metal is supplied is changed, there is an effect that the time from the dipping to the wiping may be made constant.

According to the exemplary embodiment (6), since the wiping part may be moved to a position distant from the exit and the entrance of the dipping part when the wiping part is not operated, there is an effect that the gas ejecting hole may not be blocked by molten metal flowing out of the exit and the entrance thereof.

According to the exemplary embodiment (10) not covered by claims, there is an effect that the plating thickness may be easily adjusted by adjusting the pressure of the blowing-off device.

According to the exemplary embodiments (11) and (15) not covered by claims, since the inner face or the outer face may be simultaneously plated with different metals, there is an effect that the process may be simplified.

### BRIEF DESCRIPTION OF DRAWINGS

FIG. 1 is a schematic configuration diagram illustrating a molten metal-plating steel pipe manufacturing system according to the embodiment.
FIG. 2 is a schematic configuration diagram illustrating an inner-face molten metal-plating device according to the embodiment.
FIG. 3 is a schematic configuration diagram illustrating a pouring part of the inner-face molten metal-plating device according to the embodiment.
FIG. 4 is a schematic configuration diagram illustrating a movable part of the inner-face molten metal-plating device according to the embodiment.
FIG. 5 is a schematic configuration diagram illustrating an outer-face molten metal-plating device according to the embodiment.
FIG. 6 is a diagram illustrating a shape of a steel pipe and a dipping part of the outer-face molten metal-plating device.
FIG. 7 is a diagram illustrating a schematic configuration of a movable open circular type wiping part.
FIG. 8 is a diagram illustrating a relation between a plating speed and a dipping length of molten metal.
FIG. 9 is a diagram illustrating a relation between a dipping time and a thickness of a galvanized alloy layer.
FIG. 10 is a diagram illustrating a result of Working example.
FIG. 11 is a diagram illustrating a result of Working example.
FIG. 12 is a diagram illustrating a result of Working example.

### BEST MODE(S) FOR CARRYING OUT THE INVENTION

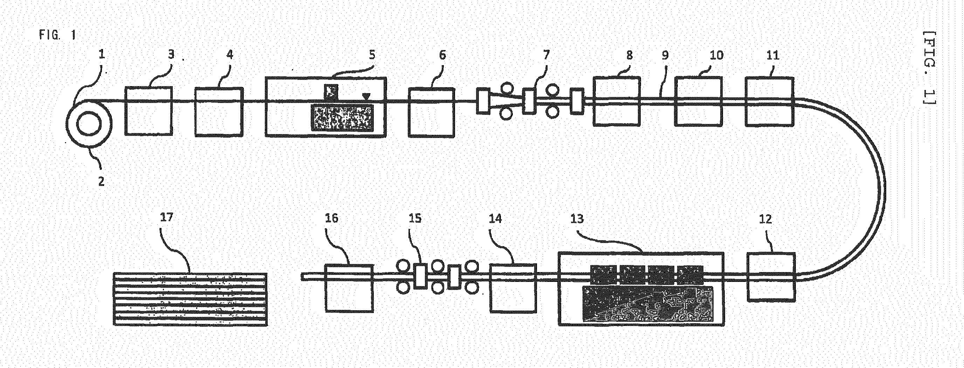

Hereinafter, an embodiment of the invention will be described in detail. FIG. 1 is a schematic configuration diagram illustrating a manufacturing system of molten metal-plating steel pipe according to the embodiment. The manufacturing system includes: an uncoiler 2 which continuously supplies an elongated steel sheet wound around a coil 1; a forming device 7 which continuously forms the steel sheet supplied from the uncoiler 2 into a tubular shape; an inner-face molten metal-plating device 5 which allows a steel sheet to be molten metal-plated with desired metal immediately before the steel sheet is continuously formed in a tubular shape; a welding device 8 which forms a tubular body by continuously welding a longitudinal end face joint portion of the plated steel sheet formed in a tubular shape; a cutting device 10 which continuously cuts a welded bead portion formed on the outer face of the tubular body; an outer-face molten metal-plating device 13 which includes plural (for example, four) dipping parts and forms a molten metal-plated steel pipe by allowing the outer face of the tubular body to be continuously hot-dip plated; a sizing device 15 which forms a molten metal-plating steel pipe into standard dimensions; and a cutting device 16 which cuts the molten metal-platingsteel pipe into a predetermined length.

If necessary, a shot blasting device 3, a pretreatment device 4 which performs an oxidization preventing flux liquid applying operation and a drying and preheating operation, a flux applying device 11 which continuously applies a flux liquid for cleaning the outer face of the tubular body and preventing the oxidization thereof, or a preheating device 12 which dries the outer face of the tubular body and preheats the tubular body may be provided. Depending on the property of plating metal, a first cooling trough (tank) 6 which cools the steel sheet after the molten metal-plating is performed thereon or a second cooling trough 14 which cools the tubular body after the molten metal-plating is performed thereon is provided. The cooling trough is essentially provided if the metal-plating is galvanizing.

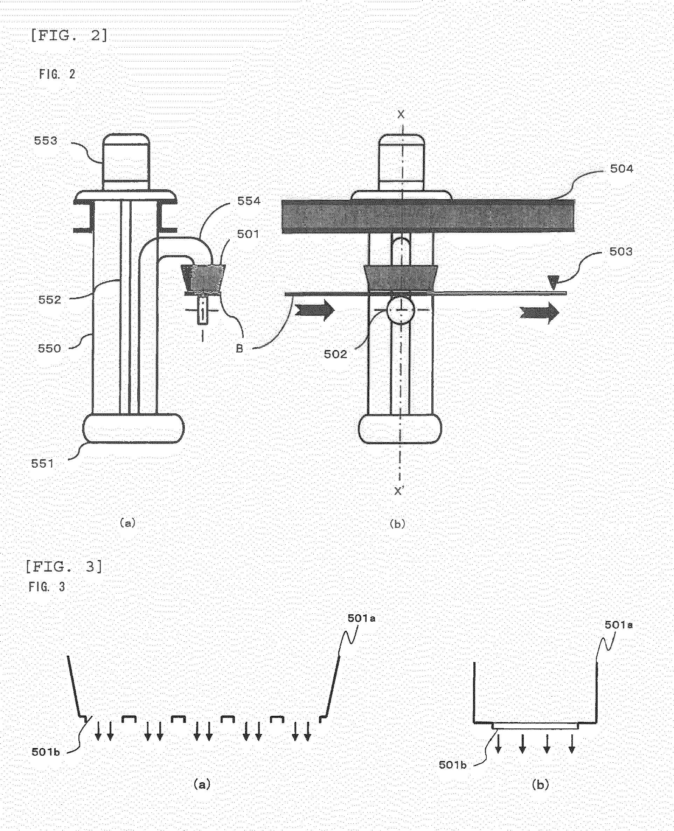

Next, the configuration of the inner-face molten metal-plating device 5 which is the characteristic point of the invention will be described. FIG. 2(a) is a schematic cross-sectional view taken along the line X-X' of the inner-face molten metal-plating device 5 according to the embodiment, and FIG. 2(b) is a conceptual side view illustrating the inner-face molten metal-plating device 5. The inner-face molten metal-plating device 5 according to the embodiment includes: a molten metal pump 550 which supplies molten metal into a pouring part; a pouring part 501 which pours molten metal supplied from the molten metal pump to the steel sheet so as to perform a plating treatment thereon; a support part 502 which supports the rear face of the steel sheet so as to prevent the warpage of the steel sheet; an inner-face wiping part 503 (for example, a blowing-off device such as an inert gas or air wiper) which removes surplus molten metal from the pouring part; and a movable part 504 (a slide base frame) for enabling to adjust the relative positional relation between the pouring part and the wiping part. The structure of the movable part 504 will be described later in detail. Here, the molten metal pump 550 includes: an impeller casing 551 which accommodates an impeller for pumping molten metal; an impeller shaft 552 which transmits the rotational driving force of the pump motor to the impeller accommodated in the impeller casing; a pump motor 553 which serves as a power source for pumping molten metal; and a molten metal discharge port 554 which discharges molten metal sent from the impeller casing. Here, the detailed structure of the pouring part 501 will be described. As illustrated in the schematic diagram of FIG. 3, although it is not particularly limited, the pouring part 501 includes, for example, a container 501a and plural molten metal pouring holes 501b which are formed in the bottom portion thereof. Furthermore, here, a dipping length of molten metal means the distance from the pouring hole positioned at the most upstream side of the line to the wiping part 503. Here, the wiping part 503 may be movable, but may be appropriately fixed so as to maintain the distance from the position of the wiping part 503 to the cooling trough to be constant in a case where the cooling trough is needed particularly at the time of performing galvanizing.

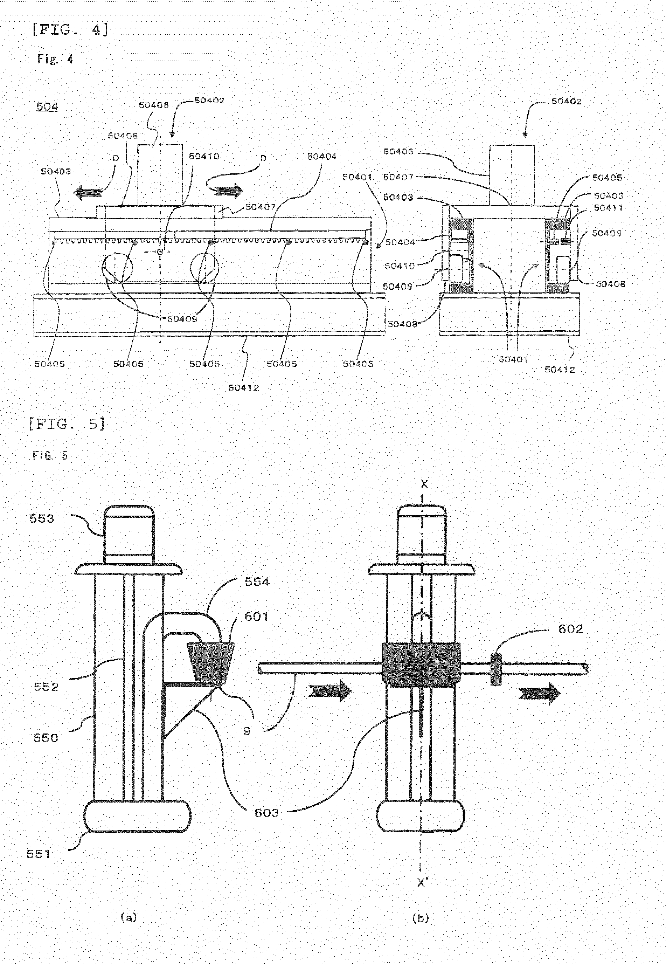

FIG. 4 is a schematic diagram illustrating the movable part according to the embodiment. The movable part 504 includes a base frame 50401 and a pump main body base 50402. Furthermore, although it is not illustrated in the drawings, the pump main body base is connected to the pouring part 501, and when its portion moves, the pouring part may be moved and the dipping length of molten metal may be adjusted. The base frame includes: a pair of slide base frames 50403; a rack gear 50404 which is formed so as to be fittable to a pinion gear which will be described later and is installed in the substantially entire face of one of the slide base frames; and positioning sensors A50405 which are installed in at least one slide base frame with substantially the same interval therebetween. The pump main body base includes a pump main body 50406; a ceiling plate 50407; side plates 50408 which are formed at both sides of the ceiling plate; a guide roller 50409 which is installed at the two side plates so as to receive the weight of the pump and easily move the pump main body; a pinion gear 50410 which is formed so as to be fittable to the rack gear so as to perform a driving and positioning operation; and a positioning sensor B50411 which is installed in at least one of the side plates. Further, at the lower portion of the base frame, a base frame support body 50412 may be equipped. Due to the strong and reliable transmission without slip through the meshing between the pinion gear 50410 and the rack gear 50404 fixed to the slide base frame 50403, it is configured to be movable to the positioning sensors A50405 which are installed in a distance determined in advance. However, the moving method is not limited to the above-described method. For example, the moving distance may be set without the positioning sensor by using the number of rotations of the pinion gear through an electric motor and a speed changer, a servo motor or the like.

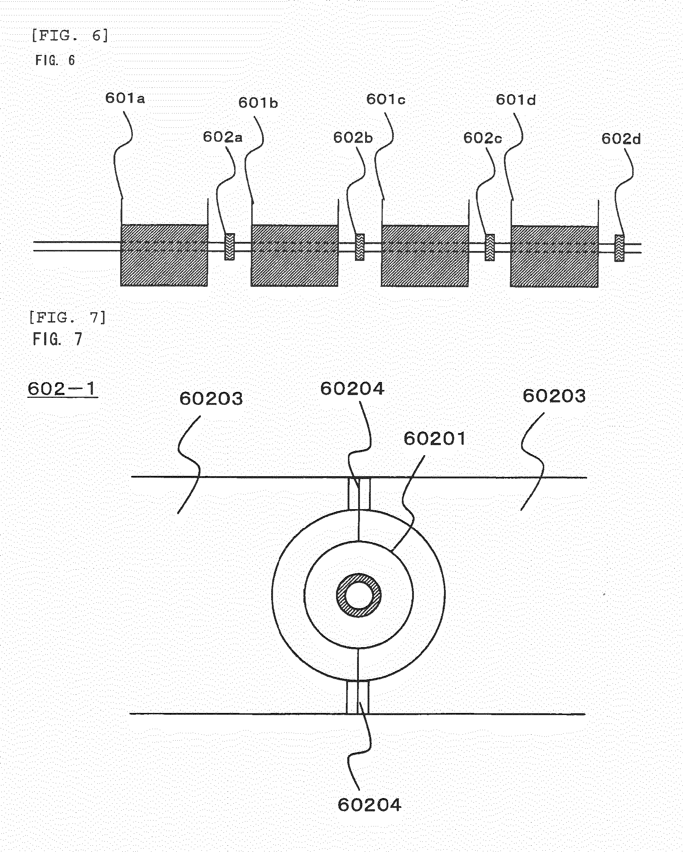

Next, the configuration of the outer-face molten metal-plating device 13 according to an embodiment of the invention will be described. Here, the outer-face molten metal-plating device 13 includes plural (for example, four) parts illustrated in FIG. 5. FIG. 5(a) is a schematic cross-sectional view taken along the line X-X' of one unit of the outer-face molten metal-plating device 13 according to the embodiment, and FIG. 5(b) is a conceptual side view illustrating one unit of the outer-face molten metal-plating device 13. The outer-face molten metal-plating device 13 includes: a molten metal pump 550 which supplies molten metal into a dipping part; a dipping part 601 which stores the molten metal supplied from the molten metal pump and allows the molten metal to pass through the steel pipe 9 so as to perform a molten metal-plating treatment thereon; and a wiping part 602 (for example, a blowing-off device such as an inert gas or air wiper) which removes surplus molten metal attached to the steel pipe at the time of performing the plating treatment by the dipping part. The wiping part will be described later in detail. Furthermore, the wiping part may further include a dipping part support 603 which supports the dipping part. Furthermore, since the configuration of the molten metal pump 550 is the same as that of the inner-face molten metal-plating device 5, the description thereof will not be repeated by giving the same reference numeral thereto. Here, FIG. 6 schematically illustrates the periphery of the steel pipe when these parts are arranged in the outer-face molten metal-plating device. Here, in the outer-face molten metal-plating device 13, the respective dipping parts 601 are continuously arranged in a direction where the steel pipe advances. Further, with regard to the distance from the exit to the entrance between the respective dipping parts, it is desirable to set the distance so that the steel pipe is continuously dipped in the molten metal flowing out of the exit and the entrance of the dipping parts. The wiping part 602 is provided at the downstream of each dipping part. It is desirable to configure the wiping parts so that only the wiping part(s) immediately after the dipping part(s) to which molten metal is supplied is(are) operated. This is because the wiping cools the steel pipe dipped in the molten metal and affects the quality of plating. Here, the wiping parts 602a to 602c which are provided between the dipping parts are movable ring-opening type wiping parts 602-1. FIG. 7 illustrates the configuration of the movable open circular type wiping part 602-1. The movable open circular type wiping part 602-1 includes: an annular portion 60201 which surrounds the outer periphery of the steel pipe; plural gas ejecting holes 60202 (not illustrated) which are formed inside the annular portion and blow a gas toward the steel pipe; and support bodies 60203 which support the annular portion. Here, the annular portion 60201 includes a notch 60204 which halves the annular portion, and when the support bodies are operated so as to be away from each other, the support bodies may be movable to a position distant from the steel pipe. With such a moving mechanism, since the wiping part may be movable to a position distant from the exit and the entrance of the dipping parts when the movable open circular type wiping part is not operated, the gas ejecting holes are not blocked by the molten zinc which flows out of the exit and the entrance. In this way, since there are plural outer-face molten metal dipping parts according to embodiment, when the number of the dipping parts to which the molten metal is supplied is (are) adjusted, the thickness of the plated alloy layer of the outer face of the steel pipe may be equalized by adjusting the dipping length of the molten metal in accordance with a change in the line speed. Furthermore, the outer-face molten metal-plating device 13 may be used at the time of plating the same type of metal (for example, molten zinc). At the time of further plating (special plating) different metal, the different metal may be introduced into the dipping part (s). Further, in addition to the outer-face molten metal-plating device 13, another outer-face molten metal-plating device (with, for example, the same configuration) may be installed at the downstream of the outer-face molten metal-plating device 13.

Next, the manufacturing method of the invention using the above-described manufacturing line will be described. First, the steel sheet which is wound in a coil shape is continuously supplied from the uncoiler 2 toward the downstream side of the line. Next, a predetermined pretreatment is performed on the steel sheet by the shot blasting device 3 or the pretreatment device 4, and then an inner-face plating treatment is performed on one face of the supplied the steel sheet by the inner-face molten metal-plating device 5. The inner-face plating treatment will be described later in detail. Next, after the steel sheet of which one face was plated is cooled by the cooling trough 6, the steel sheet is introduced into the forming device 7 and is formed in a tubular shape by cold-forming. Then, the longitudinal end face joint portion of the steel sheet is continuously welded by the welding device 8, so that a continuous single tubular body 9 is formed.

Next, the tubular body 9 is supplied to the cutting device 10 equipped with a blade having a shape according to the outer face of the tubular body 9. Then, the welded bead portion which is formed on the outer face of the tubular body 9 is cut away by the blade of the cutting device 10, so that the outer face of the tubular body 9 becomes smooth.

Subsequently, the tubular body is sent to the flux applying device 11, so that the flux liquid for cleaning the outer face of the tubular body and preventing the oxidization thereof is applied thereon. The tubular body 9 is sent to the preheating device 12 so that residual heat is applied thereto, thereby drying the outer face.

Subsequently, the tubular body is sent to the outer-face molten metal-plating device 13. The tubular body 9 is dipped into the dipping part filled with pumped molten metal in the outer-face molten metal-plating device 13, so that the entire outer face is subjected to the molten metal-plating. The tubular body 9 which was dipped into the dipping part is provided with a molten metal-plated layer having a strong alloy layer, and the surplus molten metal-plating is removed in the wiping device 602, so that the molten metal-plated steel pipe is formed. Subsequently, it is cooled by the cooling trough 14. Furthermore, the outer-face molten metal-plating treatment will be described later in detail.

Then, the molten metal-plated steel pipe is subjected to cold rolling in the sizing device 15 so that the outer diameter is formed into a standard dimension. In the embodiment, the cold rolling is also needed so that the molten metal-plated layer has a comparatively uniform thickness in the circumferential direction. That is, even when the molten metal-plated layer immediately after formed by the outer-face molten metal-plating device has an irregular thickness in the circumferential direction, the molten metal-plated layer may be made to have a comparatively uniform thickness through the subsequent cold rolling or the like. In this way, in the embodiment, after the molten metal-plated layer is formed by the outer-face molten metal-plating device, for example, it is desirable to perform a sizing process such as cold rolling and perform a process which allows the molten metal-plated layer formed by the molten metal-plating treatment to have a comparatively uniform thickness (a process which equalizes the distribution of the thickness compared to the case immediately after the molten metal layer is formed).

The molten metal-plated steel pipe is cut into a predetermined length by the cutting device 16, so that a steel pipe product 17 is obtained.

Here, the inner-face plating treatment will be described in detail. The inner-face plating treatment is a process in which surplus metal of the molten metal poured from the pouring part 501 of the inner-face molten metal-plating treatment device 5 to the steel sheet B is removed by the wiping part 503. Here, in the invention, a fact is examined in which the molten metal dipping time is proportional to the thickness of the formed alloy layer at the time of performing the molten metal-plating. However, the inner-face plating method which is used in the continuous line is performed according to the method in which molten metal is poured to the steel sheet from the upper side thereof. Here, although "dipping" as the general meaning is not performed, under a premise that the conditions, where the molten-metal is on the steel sheet by pouring, is "dipping", the distance between the pouring part and the wiping part is adjusted as the dipping length of the molten metal. That is, even when the line speed is not changed, the thickness of the plated alloy layer may be adjusted by adjusting the molten metal dipping time in a manner such that the distance between the pouring part 501 and the wiping part 503 is changed. For example, when the line speed is temporarily decreased, the thickness of the plated alloy layer may be maintained so as to be uniform by adjusting the distance between the pouring part 501 and the wiping part 503 to be short. That is, since the thickness of the plated alloy layer may be made to be substantially uniform, a problem such as cracking or peeling of the plated layer hardly occurs.

Further, in the method according to the embodiment not covered by claims, the thickness of the plated layer may be easily adjusted by only adjusting the pressure of air or N₂ gas ejected from the wiping part 503. Incidentally, generally, with regard to the manufacturing of the plated steel sheet, the steel sheet is perpendicularly and rapidly raised from the molten metal pot in the case of so-called hot-dipping. At this time, the attachment amount of the molten metal which is raised together with the steel sheet by the viscosity is adjusted by the air or N₂ gas wiping. Generally, in this type of process, there is a need to increase the amount of raised molten metal by increasing a speed at which the steel sheet is raised, that is, a speed at which the sheet passes in order to increase the plating attachment amount. However, since the heating capability for plating the steel sheet is determined according to the condition of the facility, the sheet passage speed decreases in the case of the thick-walled steel sheet. Accordingly, the raised molten metal amount decreases, and the plating attachment amount may not be easily increased. In the inner-face metal-plating of the method according to the embodiment, the attachment amount may be controlled by the air or N₂ gas wiping pressure regardless or the amount of the raised molten metal and the thickness of the steel sheet in a manner such that the steel sheet passes in the horizontal direction instead of the perpendicular direction.

Next, the outer-face plating treatment not falling within the scope of the claimed subject-matter will be described in detail. Even in the outer-face plating treatment, the dipping length of the molten metal is important. The thickness of the outer-face plated alloy layer may be adjusted in a manner such that molten metal is charged into the dipping part(s) by the number of the dipping part(s) necessitated to obtain the required thickness of the plated alloy layer among the plural outer-face molten metal-plating devices. Further, due to adjusting the thickness of the plated alloy layer in this way, even when the line speed changes, the thickness of the plated alloy layer of the outer face may be maintained to be uniform.

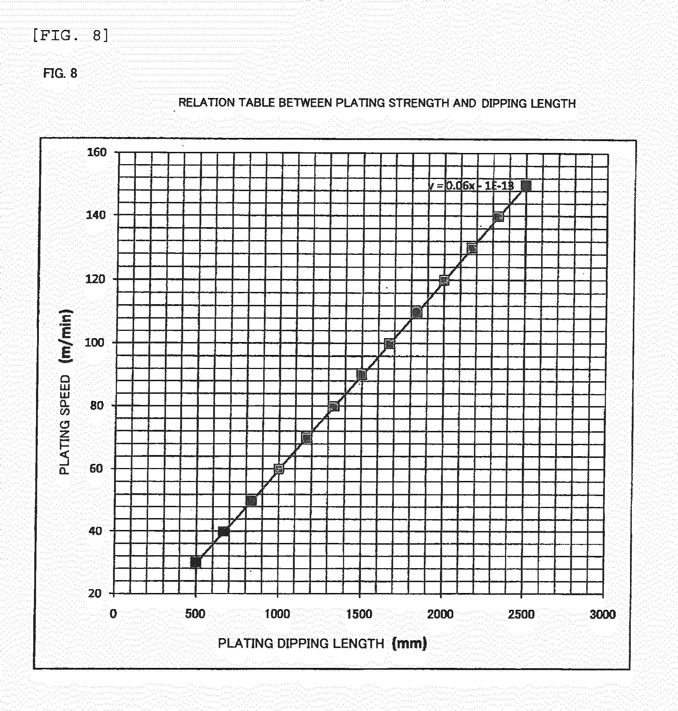

Furthermore, from the viewpoint of bending workability, the thickness of the alloy layer is desirably 4 µm or less, is more desirably 3 µm or less, and is further more desirably 2 µm or less. When the thickness of the alloy layer is set to be within this range, cracking or peeling of the plating hardly occurs due to the bending. Here, in order to adjust the thickness of the alloy layer, the plating dipping time is desirably 1 second or less, is more desirably 0.3 seconds or less, and is further more desirably 0.25 seconds or less. FIG. 8 illustrates a relation between the dipping length of the molten metal and the plating speed when the alloy layer is set to be 1 µm. Here, the plating speed herein indicates the length of the steel pipe to be plated in the continuous line per minute, and is equal to the pipe manufacturing speed (the line speed) . That is, when the thickness of the alloy layer needs to be maintained to be 1 µm, the dipping length of the molten metal may be set so as to satisfy the relation of FIG. 8 depending on a change in the line speed.

Here, the invention is not limited to the above-described embodiment. For example, in the embodiment, although the molten metal-plated layer is formed on both inner and outer faces using the melting device, the molten metal-plated layer may be formed on only the inner face using the molten metal-plating device.

Further, the upper face of the outer-face plated layer may be coated with a protection coating using a synthetic resin. In this way, the rust preventing effect of the molten metal-plated steel pipe may be further improved.

Furthermore, in the embodiment, the plating performed on the steel pipe is not particularly limited, and for example, zinc may be exemplified. However, if necessary, other metal may be applied. [Working example]

### (Working example 1)

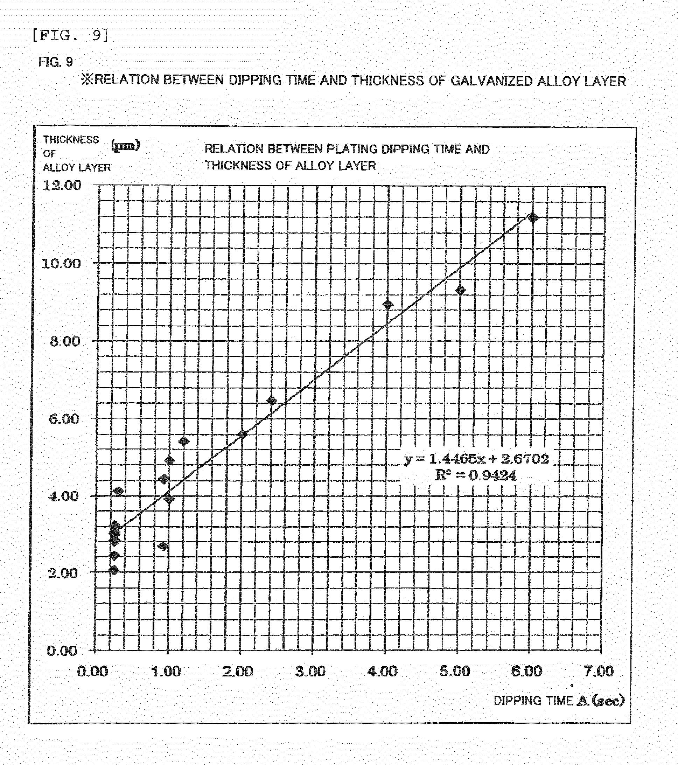

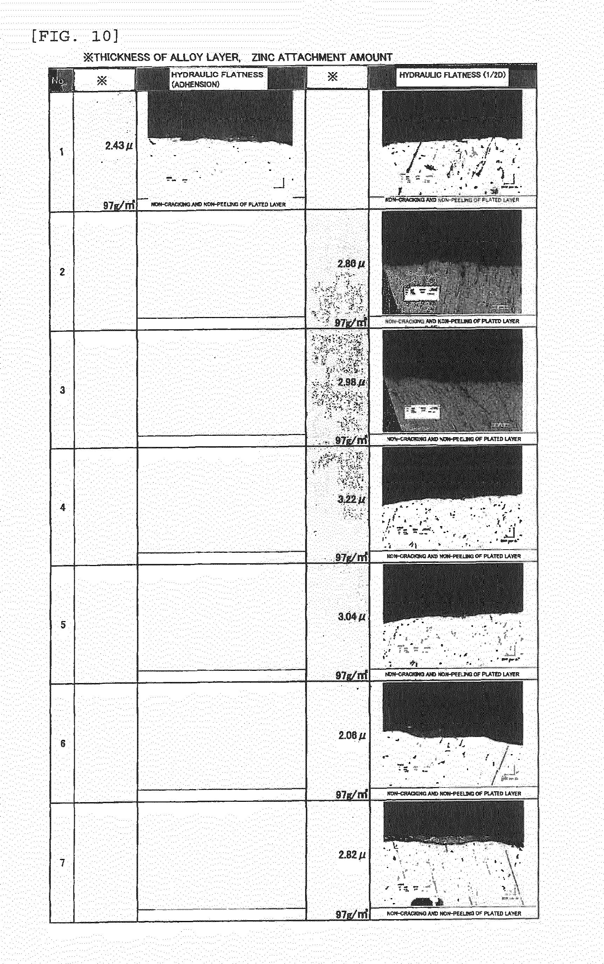

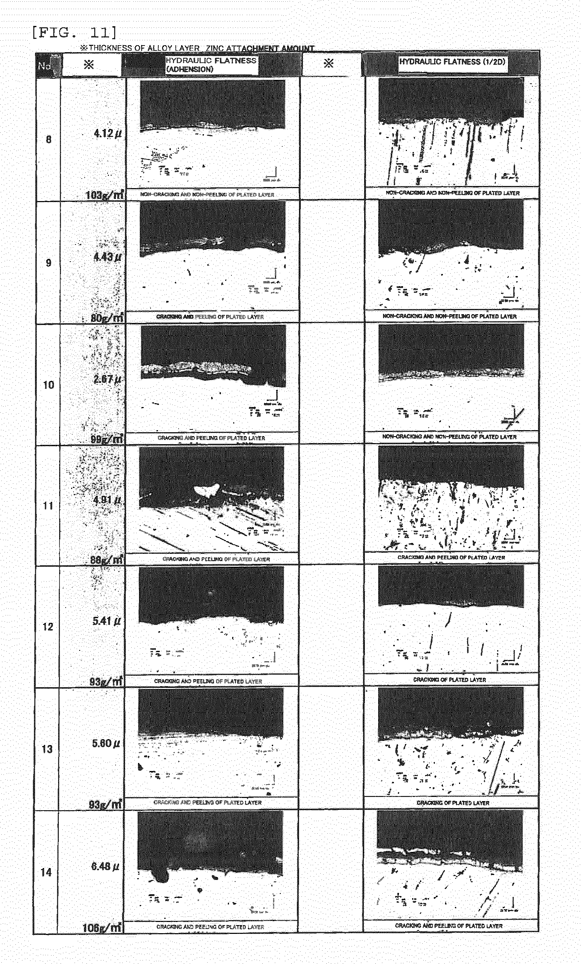

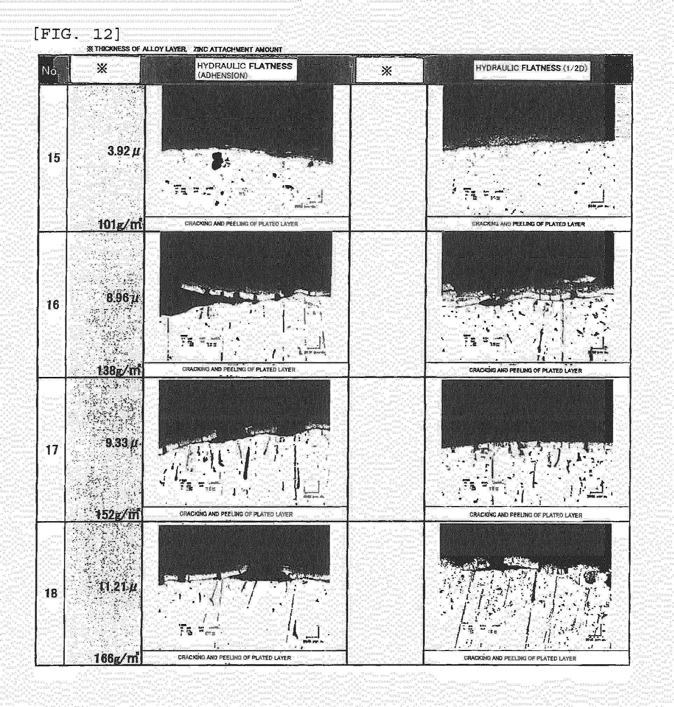

The rolled steel plate with a thickness of 1.2 mm and a width of 59.5 mm was set on a manufacturing line with the same configuration as that of FIG. 1 except that eight parts illustrated in FIG. 5 were installed. Then, shot blasting was performed on the inner face thereof by the shot blasting device, a molten galvanized layer was formed on the inner face by the inner-face molten metal-plating device, a continuous steel pipe was formed, a molten galvanized layer was formed on the outer face thereof by the outer-face molten metal-plating device, and then the continuous steel pipe was cut. Here, Table 1 lists a relation between the zinc dipping time {(the distance from the position entering in the dipping part to the wiping)/the line speed} and the thickness of the plated alloy layer of the outer face. Then, FIG. 9 is a diagram in which the zinc dipping time is plotted with respect to the thickness of the plated alloy layer. In this way, it is found that the dipping time is proportional to the thickness of the plated alloy layer. Furthermore, the bending workability of the outer-face plating of the steel pipe obtained by the experiment was evaluated. Incidentally, the evaluation of plating bending workability was performed according to JIS G 3444 and JIS G 3445. The cross-sectional images observed by the microscope are illustrated in FIGS. 10 to 12.

[Table 1]

**Table 1**

| No | Line speed | Temperature of zinc | Dipping length | Number of supplied dipping units | Zinc dipping time | Thickness of alloy layer | Plating skin |
|---|---|---|---|---|---|---|---|
| | M/min | °C | M | | sec | *µ*m | |
| 1 | 120 | 459 | 0.5 | 1 | 0.25 | 2.43 | OK |
| 2 | 120 | 459 | 0.5 | 1 | 0.25 | 2.80 | OK |
| 3 | 120 | 459 | 0.5 | 1 | 0.25 | 2.98 | OK |
| 4 | 120 | 459 | 0.5 | 1 | 0.25 | 3.22 | OK |
| 5 | 120 | 459 | 0.5 | 1 | 0.25 | 3.04 | OK |
| 6 | 120 | 459 | 0.5 | 1 | 0.25 | 2.06 | OK |
| 7 | 120 | 459 | 0.5 | 1 | 0.25 | 2.82 | OK |
| 8 | 100 | 459 | 0.5 | 1 | 0.30 | 4.12 | OK |
| 9 | 130 | 457 | 2 | 4 | 0.92 | 4.43 | OK |
| 10 | 130 | 457 | 2 | 4 | 0.92 | 2.67 | OK |
| 11 | 120 | 457 | 2 | 4 | 1.00 | 4.91 | OK |
| 12 | 100 | 459 | 2 | 4 | 1.20 | 5.41 | OK |
| 13 | 60 | 459 | 2 | 4 | 2.00 | 5.60 | OK |
| 14 | 50 | 460 | 2 | 4 | 2.40 | 6.48 | OK |
| 15 | 120 | 457 | 2 | 4 | 1.00 | 3.92 | Zebra |
| 16 | 60 | 464 | 4 | 8 | 4.00 | 8.96 | OK |
| 17 | 48 | 464 | 4 | 8 | 5.00 | 9.33 | OK |
| 18 | 40 | 464 | 4 | 8 | 6.00 | 11.21 | OK |

### EXPLANATIONS OF REFERENCE NUMERALS

- 1:: coil
- 2:: uncoiler
- 3:: shot blasting device
- 4:: pretreatment device
- 5:: inner-face molten metal-plating device
- 6:: first cooling trough
- 7:: forming device
- 8:: welding device
- 9:: tubular body
- 10:: cutting device
- 11:: flux applying device
- 12:: preheating device
- 13:: outer-face molten metal-plating device
- 14:: second cooling trough
- 15:: sizing device
- 16:: cutting device

## Claims

1. A steel pipe manufacturing system that manufactures a steel pipe, of which at least an inner face is subjected to molten metal-plating, from a steel sheet in a continuous manufacturing line, the system comprising:
an inner-face plating performing part that performs molten metal-plating by pouring molten metal to the upper side of the steel sheet corresponding to the inner face of the steel pipe;and
a steel pipe forming part for obtaining a continuous steel pipe by continuously cold-forming the steel sheet subjected to the inner-face plating into a tubular shape and seam-welding a longitudinal end face joint portion of the steel sheet formed in the steel pipe;
wherein the inner-face plating performing part includes:
a pouring part that pours molten metal to the upper side of the steel sheet,
a molten metal supply part that can supply molten metal to the pouring part, and
an inner-face wiping part that removes molten metal poured by the pouring part,
wherein the pouring part has a movable means that is movable in parallel to a direction where the steel sheet advances, and
wherein a relative distance between an initial molten metal pouring position and a position of the inner-face wiping part is adjustable.

2. The system according to claim 1, comprising:
an outer-face plating performing part that performs molten metal-plating by dipping the outer face of the steel pipe into molten metal,
wherein a dipping length of molten metal is adjustable in the outer-face plating performing part

3. The system according to any one of claims 1 or 2,
wherein the position of the inner-face wiping part is fixed.

4. The system according to claim 2,
wherein the outer-face plating performing part includes
a plurality of dipping parts which have space for allowing the continuous steel pipe to pass therethrough, allow the outer face of the continuous steel pipe to be dipped into molten metal when molten metal is introduced into the spaces, and are continuously arranged in a direction where the continuous steel pipe advances,and
an outer-face wiping part that removes surplus metal from the continuous steel pipe dipped into molten metal by the dipping part, and
a molten metal supply part that can supply molten metal into the dipping part,
wherein the molten metal supply part is, on the supply, able to change the number of the dipping parts where molten metal is to be supplied.

5. The system according to claim 4,
wherein the outer-face wiping part is installed immediately after each of the plurality of dipping parts, and
which can determine that any wiping parts of the plurality of wiping parts are to be operated.

6. The system according to claim 5,
wherein the outer-face wiping part installed between the dipping parts is a open circular and movable type wiping part which includes an annular portion surrounding the continuous steel pipe and a plurality of gas ejecting holes formed inside the annular portion and in which the annular portion is ring-opened and movable to a position distant from the continuous steel pipe.

7. A method of manufacturing a steel pipe, of which at least an inner face is subjected to molten metal-plating, from a steel sheet in a continuous manufacturing line, the method comprising:
performing molten metal-plating in an inner-face plating performing part by pouring molten metal to the upper side of the steel sheet corresponding to the inner face of the steel pipe; and
obtaining a continuous steel pipe by a steel pipe forming part by continuously cold-forming the steel sheet subjected to the inner-face plating into a tubular shape and seam-welding a longitudinal end face joint portion of the steel sheet formed in the steel pipe;
wherein the inner-face plating includes:
pouring molten metal by a pouring part to the upper side of the steel sheet,
supplying molten metal to the pouring part by a molten metal supply part, and
removing molten metal poured by the pouring part by an inner-face wiping part,
moving the pouring part in parallel to a direction where the steel sheet advances to adjust a relative distance between an initial molten metal pouring position and a position of the inner-face wiping part to adjust the molten metal dipping time.

## Patentansprüche

1. Stahlrohrherstellungssystem, das ein Stahlrohr, von dem mindestens eine Innenfläche einer Metallschmelzplattierung unterzogen wird, aus einem Stahlblech in einer kontinuierlichen Fertigungslinie herstellt, wobei das System umfasst:
einen Teil zur Durchführung des Plattierens der Innenfläche, der das Plattieren mit geschmolzenem Metall durch Gießen von geschmolzenem Metall auf die Oberseite des Stahlblechs, die der Innenfläche des Stahlrohrs entspricht, durchführt; und
ein Stahlrohrformungsteil zum Erhalten eines kontinuierlichen Stahlrohrs durch kontinuierliches Kaltformen des Stahlblechs, das der Innenflächenplattierung unterzogen wurde, in eine rohrförmige Form und Nahtschweißen eines Längsendflächenverbindungsabschnitts des Stahlblechs, das in dem Stahlrohr geformt ist;
wobei der die Innenflächenplattierung durchführende Teil umfasst:
ein Gießteil, das geschmolzenes Metall auf die Oberseite des Stahlblechs gießt,
ein Zufuhrteil für geschmolzenes Metall, das dem Gießteil geschmolzenes Metall zuführen kann, und
ein Innenflächenabwischteil, das das vom Gießteil gegossene geschmolzene Metall entfernt,
wobei das Gießteil ein bewegliches Mittel aufweist, das parallel zu einer Richtung, in der sich das Stahlblech vorwärts bewegt, beweglich ist, und
wobei ein relativer Abstand zwischen einer anfänglichen Gießposition für geschmolzenes Metall und einer Position des Innenseitenabwischteils einstellbar ist.

2. System nach Anspruch 1, umfassend:
einen Außenflächen-Plattierteil, der das Plattieren mit geschmolzenem Metall durch Eintauchen der Außenfläche des Stahlrohrs in geschmolzenes Metall durchführt,
wobei eine Eintauchlänge des geschmolzenen Metalls in dem Teil, der die Beschichtung der Außenfläche durchführt, einstellbar ist.

3. Das System nach einem der Ansprüche 1 oder 2,
wobei die Position des Abstreifteils an der Innenseite festgelegt ist.

4. Das System nach Anspruch 2,
wobei der die Außenfläche beschichtende Teil Folgendes umfasst:
eine Vielzahl von Eintauchteilen, die einen Raum aufweisen, durch den das kontinuierliche Stahlrohr hindurchgehen kann, die es ermöglichen, dass die Außenfläche des kontinuierlichen Stahlrohrs in geschmolzenes Metall eingetaucht wird, wenn geschmolzenes Metall in die Räume eingeführt wird, und die kontinuierlich in einer Richtung angeordnet sind, in der sich das kontinuierliche Stahlrohr vorwärts bewegt, und
ein Außenflächenabstreifteil, das überschüssiges Metall von dem kontinuierlichen Stahlrohr entfernt, das durch das Eintauchteil in geschmolzenes Metall eingetaucht wird, und
ein Zufuhrteil für geschmolzenes Metall, das geschmolzenes Metall in das Eintauchteil zuführen kann,
wobei das Zufuhrteil für geschmolzenes Metall in der Lage ist, bei der Zufuhr die Anzahl der Eintauchabschnitte zu ändern, an denen geschmolzenes Metall zugeführt werden soll.

5. Das System nach Anspruch 4,
bei dem das Außenflächen-Wischteil unmittelbar nach jedem der mehreren Eintauchteile installiert ist und
das feststellen kann, dass beliebige Wischteile der Vielzahl von Wischteilen zu betätigen sind.

6. Das System nach Anspruch 5,
wobei das zwischen den Eintauchteilen installierte Außenflächen-Wischteil ein offenes, kreisförmiges und bewegliches Wischteil ist, das einen ringförmigen Abschnitt, der das durchgehende Stahlrohr umgibt, und eine Vielzahl von Gasausstoßlöchern aufweist, die innerhalb des ringförmigen Abschnitts ausgebildet sind, und bei dem der ringförmige Abschnitt ringförmig geöffnet und in eine von dem durchgehenden Stahlrohr entfernte Position beweglich ist.

7. Verfahren zur Herstellung eines Stahlrohrs, von dem mindestens eine Innenfläche einer Metallschmelzplattierung unterzogen wird, aus einem Stahlblech in einer kontinuierlichen Fertigungsstraße, wobei das Verfahren umfasst:
Durchführen einer Beschichtung mit geschmolzenem Metall in einem Teil, der die Beschichtung der Innenfläche durchführt, indem geschmolzenes Metall auf die Oberseite des Stahlblechs gegossen wird, die der Innenfläche des Stahlrohrs entspricht; und
Erhalten eines kontinuierlichen Stahlrohrs durch einen Stahlrohrformungsteil durch kontinuierliches Kaltformen des Stahlblechs, das der Innenflächenplattierung unterzogen wurde, in eine rohrförmige Form und Nahtschweißen eines länglichen Endflächenverbindungsabschnitts des im Stahlrohr geformten Stahlblechs;
wobei das Innenseitenplattieren umfasst:
Gießen von geschmolzenem Metall durch ein Gießteil auf die Oberseite des Stahlblechs,
Zuführen von geschmolzenem Metall zu dem Gießteil durch ein Zuführteil für geschmolzenes Metall, und
Entfernen von geschmolzenem Metall, das durch das Gießteil gegossen wurde, durch ein Innenflächenabwischteil, Bewegen des Gießteils parallel zu einer Richtung, in der sich das Stahlblech vorwärts bewegt, um einen relativen Abstand zwischen einer anfänglichen Gießposition für geschmolzenes Metall und einer Position des Innenflächenabstreifteils einzustellen, um die Tauchzeit für geschmolzenes Metall einzustellen.

## Revendications

1. Un système de fabrication de tuyaux en acier qui fabrique un tuyau en acier dont au moins une face interne est soumise à un placage de métal en fusion, à partir d'une tôle d'acier dans une ligne de fabrication continue, le système comprenant :
une pièce d'exécution d'un placage de face interne qui effectue un placage de métal en fusion en versant du métal en fusion sur la face supérieure de la tôle d'acier correspondant à la face interne du tuyau en acier ; et
une pièce formant tube d'acier pour obtenir un tube d'acier continu par formage à froid en continu de la tôle d'acier soumise au placage de face interne en une forme tubulaire et soudage par soudure continue d'une partie longitudinale de jonction de faces d'extrémité de la tôle d'acier formée en le tube d'acier ;
la pièce d'exécution de placage de face intérieure comprend :
une partie de coulée qui verse du métal en fusion sur la face supérieure de la tôle d'acier,
une partie d'alimentation en métal fondu qui est apte à alimenter la partie de coulée en métal fondu, et
une partie d'essuyage de face interne qui retire le métal en fusion versé par la partie de coulée,
la partie de coulée ayant un moyen mobile qui est mobile parallèlement à une direction dans laquelle la tôle d'acier avance, et
une distance relative entre une position initiale de coulée de métal en fusion et une position de la partie d'essuyage de face interne étant réglable.

2. Le système selon la revendication 1, comprenant :
une pièce d'exécution de placage de face externe qui effectue un placage de métal en fusion en plongeant la face externe du tuyau en acier dans du métal en fusion,
une longueur d'immersion de métal en fusion étant réglable dans la pièce d'exécution de placage de face externe.

3. Le système selon l'une quelconque des revendications 1 ou 2,
dans lequel la position de la partie d'essuyage de face interne est fixe.

4. Le système selon la revendication 2,
dans lequel la pièce d'exécution de placage de face externe comprend
une pluralité de parties plongeantes qui ont un espace pour permettre au tuyau d'acier continu de les traverser, qui permettent à la face extérieure du tuyau d'acier continu d'être plongée dans le métal en fusion lorsque du métal en fusion est introduit dans les espaces, et qui sont agencées de façon continue dans une direction selon laquelle le tube en acier continu avance, et
une partie d'essuyage de la face externe qui enlève le métal en excès du tuyau d'acier continu plongé dans le métal en fusion par la partie plongée, et
une partie d'alimentation en métal en fusion qui est apte à fournir du métal en fusion dans la partie plongée,
la pièce d'alimentation en métal en fusion étant, sur l'alimentation, apte à changer le nombre de parties plongeantes dans lesquelles le métal en fusion doit être fourni.

5. Le système selon la revendication 4,
dans lequel la partie d'essuyage de face externe est installée immédiatement après chaque partie plongeante de la pluralité de parties plongeantes, et
qui est apte à déterminer que toutes les parties d'essuyage de la pluralité de parties d'essuyage doivent être actionnées.

6. Le système selon la revendication 5,
dans lequel la partie d'essuyage de face extérieure installée entre les parties plongeantes est une partie d'essuyage ouverte de type circulaire et mobile qui comprend une partie annulaire entourant le tuyau en acier continu et une pluralité de trous d'éjection de gaz formés à l'intérieur de la partie annulaire et dans lesquels la partie annulaire est un anneau -ouvert et mobile vers une position éloignée du tuyau en acier continu.

7. Un procédé de fabrication d'un tube en acier, dont au moins une face interne est soumise à un placage de métal en fusion, à partir d'une tôle d'acier dans une ligne de fabrication continue, le procédé comprenant :
le fait d'effectuer un placage de métal en fusion dans une pièce d'exécution de placage de face interne en versant du métal en fusion sur la face supérieure de la tôle d'acier correspondant à la face interne du tube en acier ; et
le fait d'obtenir un tube d'acier continu par une pièce de formage de tube d'acier par formage à froid en continu de la tôle d'acier soumise au placage de face intérieure en une forme tubulaire et par soudage en continu d'une partie longitudinale de jonction de faces d'extrémité de la tôle d'acier formée en le tuyaux en acier ;
le placage de face interne comprend :
le fait de couler du métal en fusion au moyen d'une partie de coulée sur la face supérieure de la tôle d'acier,
le fait d'alimenter du métal en fusion à la partie de coulée par une partie d'alimentation en métal en fusion, et
le fait d'éliminer le métal en fusion versé par la partie de coulée au moyen d'une partie d'essuyage de face interne,
le fait de déplacer la partie de coulée parallèlement à une direction selon laquelle la tôle d'acier avance de façon à régler une distance relative entre une position initiale de coulée de métal en fusion et une position de la partie d'essuyage de face interne afin de régler le temps de trempage du métal en fusion.
